# DEMANDE DE BREVET EUROPEEN

(11) **EP 0 564 371 A1**
(43) Date de publication de la demande: **06.10.1993**
(21) Numéro de dépôt: 93400867.3
(22) Date de dépôt: 02.04.1993
(51) Int. Cl.: G01C 9/06, G01C 9/36, B60R 25/10

(54) **Dispositif pour la détection de changement de position angulaire d'un corps**

(30) Priorité: 02.04.1992 FR 9204020
(71) Demandeur: EUROPE AUTO-EQUIPEMENT, F-93177 Bagnolet Cedex (FR)
(72) Inventeur: Amselem, Jacques, F-94450 Limeil Brevannes (FR)
(74) Mandataire: Wagret, Frédéric Cabinet Wagret Consultants

(57) **Abrégé**

- Dispositif pour la détection de changement de position angulaire d'un corps par rapport à un plan de référence, du type comportant:
- un capteur comprenant un élément sensible à la position angulaire dudit corps;
- un premier circuit apte à délivrer un signal représentatif de ladite position; et
- un second circuit apte à comparer ledit signal représentatif de ladite position à un signal de référence correspondant audit plan de référence, et apte à délivrer un signal représentatif dudit changement;

caractérisé en ce que ledit élément sensible est constitué d'un inclinomètre.

## Description

La présente invention concerne un dispositif susceptible de détecter le changement de position angulaire d'un corps par rapport à un plan de référence.

Plus particulièrement, le dispositif selon l'invention est susceptible d'être utilisé en association avec un système d'alarme, en vue de déceler et émettre un signal d'alarme correspondant, suite à une modification de la position angulaire d'un corps tel qu'un véhicule, plus particulièrement automobile. L'invention pourra être appliquée notamment comme dispositif anti-vol pour des véhicules automobiles, susceptible d'émettre un signal d'alarme dissuasif suite à une opération de soulèvement du véhicule en vue de son enlèvement non autorisé.

On sait que le vol de véhicules automobiles est une opération fréquente et qu'il revêt différentes formes, la dernière en date étant l'enlèvement du véhicule sans effraction des portes ou du dispositif anti-vol fixé au volant. L'enlèvement non autorisé est réalisé usuellement par soulèvement du véhicule qui est accroché à un véhicule de traction du type dépannage.

On connaît déjà des dispositifs susceptibles de détecter le soulèvement d'un véhicule, et d'émettre un signal d'alarme dès que le soulèvement du véhicule dépasse un seuil fixé à l'avance.

Selon un premier type de dispositif connu, une bille métallique est disposée à l'intérieur d'une sphère creuse pourvue d'une ouverture dans laquelle est disposé un détecteur de mouvement à ultra-sons. Lorsque le véhicule est soulevé, la bille se déplace à l'intérieur de la sphère et le détecteur à ultra-sons émet un signal dès que la bille dépasse une certaine position, qui est sensée correspondre à une position de soulèvement non autorisée du véhicule. Ce dispositif présente néanmoins des inconvénients. Premièrement, il est extrêmement sensible aux chocs, puisque la bille est libre de tout mouvement à l'intérieur de la sphère. Ceci constitue un handicap sérieux pour de tels dispositifs, puisqu'il déclenche l'alarme pour des mouvements du véhicule qui ne correspondent pas à l'enlèvement non autorisé du véhicule. Il en résulte des déclenchements intempestifs qui nuisent à sa fiabilité. En outre, pendant l'utilisation du véhicule, la bille se déplace, étant soumise aux trépidations du véhicule, ce qui entraîne un taux de bruit relativement élevé dans le véhicule qui va à l'encontre de la tendance actuelle visant à réduire le niveau sonore dans l'habitacle des véhicules. De plus, ce dispositif entraîne une consommation électrique non négligeable (de quelques dizaines de milli-ampères) qui s'ajoute à la consommation des équipements électriques ou électroniques déjà en place dans le véhicule. Enfin, ce dispositif présente un encombrement non négligeable.

On connaît un second type de dispositif anti-vol, comprenant un accéléromètre susceptible de détecter un changement d'assiette du véhicule et d'émettre un signal d'alarme correspondant. Ce dispositif également présente des inconvénients majeurs.

En premier lieu, son temps de stabilisation ou de remise à zéro est extrêmement long. Ceci est dû au fait que le dispositif utilise un filtrage de signaux de faible fréquence qui est relativement faible et donc recourt à des capacités très élevées qui elles-mêmes requièrent des temps de charge excessivement longs. Par ailleurs, l'encombrement de tels dispositifs est relativement important. Enfin et surtout l'accéléromètre ne peut détecter un mouvement que dans un seul plan, ou selon un seul axe de rotation du véhicule, ce qui oblige à recourir à un artifice de disposition de l'accéléromètre selon une direction oblique par rapport à l'axe du véhicule. Il en résulte une imprécision néfaste à la fiabilité du dispositif.

Il est à noter que les deux types de dispositifs connus mentionnés ci-dessus souffrent également d'un défaut commun, à savoir qu'ils sont sensibles à la position réelle du véhicule, tel que par exemple lorsque ce dernier est stationné dans un rue en pente. Il en résulte des déclenchements intempestifs. On a tenté de remédier à cet inconvénient en opérant un réglage du " zéro ", mais cette opération est extrêmement délicate et en toute hypothèse ne couvre pas toutes les inclinaisons normales du véhicule, pour lesquelles l'alarme ne doit pas se déclencher.

La présente invention vise à remédier à ces inconvénients et propose un dispositif pour la détection d'un changement de position angulaire d'un corps tel qu'un véhicule, afin de constituer notamment un dispositif anti-vol. Le dispositif selon l'invention présente l'avantage d'être peu encombrant, de présenter une consommation électrique très faible, d'être silencieux, d'être' quasiment insensible aux chocs, et de permettre un ajustement automatique du zéro, c'est-à-dire de la position initiale du véhicule placé sous surveillance.

A cette fin, selon l'invention, le dispositif pour la détection de changement de position angulaire d'un corps par rapport à un plan de référence, du type comportant:
- un capteur comprenant un élément sensible à la position angulaire dudit corps et un premier circuit apte à délivrer un signal représentatif de ladite position;
- un second circuit apte à comparer ledit signal représentatif de ladite position à un signal de référence correspondant audit plan de référence, et apte à délivrer un signal représentatif dudit changement,
   est caractérisé en ce que ledit élément sensible est constitué d'un inclinomètre.

Avantageusement, l'inclinomètre est du type capacitif et comporte au moins deux capacités variables disposées dans des plans différents.

De préférence, le premier circuit comprend un oscillateur susceptible d'émettre un signal à fréquence constante, un interrupteur du type à bascule et un convertisseur alternatif/continu.

Selon un mode préféré de réalisation, l'inclinomètre comporte quatre capacités reliées deux par deux.

Selon un mode avantageux, le dispositif comprend des moyens susceptibles d'engendrer un signal de référence, correspondant à un plan de référence du corps, ajustable.

L'invention sera bien comprise à la lumière du dessin annexe dans lequel:
- la figure 1 montre schématiquement un véhicule pourvu du dispositif selon l'invention;
- la figure 2 montre un synoptique de fonctionnement du dispositif de l'invention;
- les figures 3a et 3b montrent l'inclinomètre capacitif respectivement vu en coupe et en perspective;
- la figure 4 représente le schéma électrique du dispositif;
- les figures 5a, 5b et 5c représentent le signal électrique engendré par l'oscillateur pour des positions du corps sous surveillance, respectivement au repos, incliné suivant une première direction par rapport au plan de référence et incliné suivant la direction opposée.

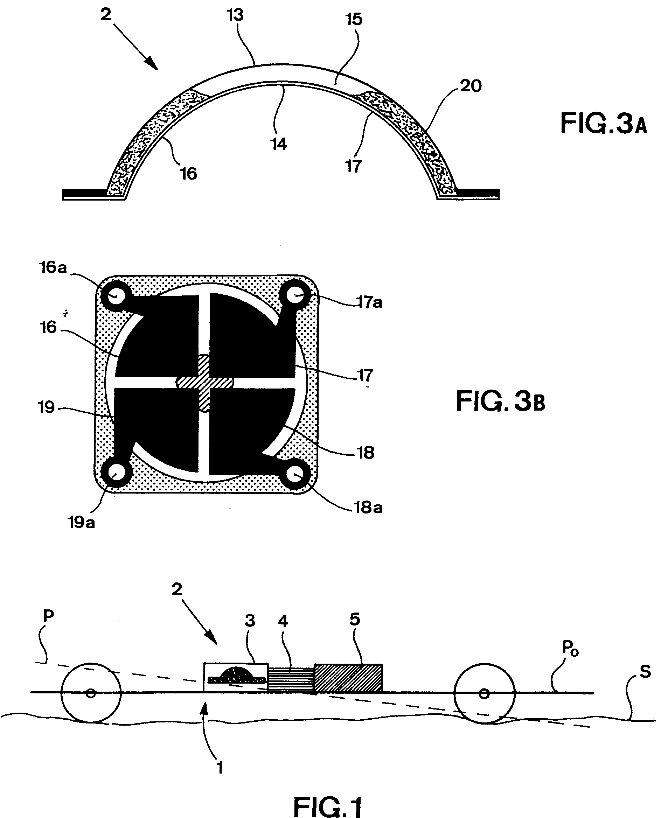

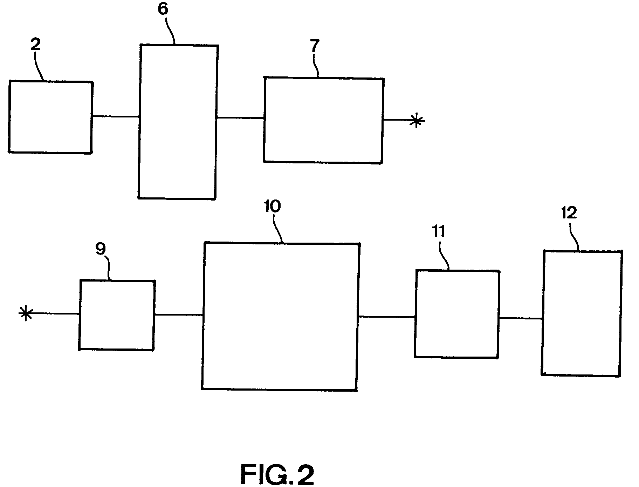

La figure 1 montre un corps 1, représenté sous la forme schématique d'un véhicule automobile, dans un exemple d'application de l'invention. Le véhicule 1 repose sur le sol S et présente une position angulaire de repos, par exemple sensiblement horizontale, et symbolisée par un plan de référence P0. Le véhicule est susceptible de subir une inclinaison par rapport au plan de référence P0, ladite inclinaison étant symboliquement représentée par la plan P. Cette inclinaison peut par exemple résulter d'une opération de soulèvement du véhicule en vue de son enlèvement non autorisé. Le véhicule 1 est pourvu du dispositif selon l'invention référencé 2 et comprenant un capteur 3 sensible à l'inclinaison ou la position angulaire du véhicule, des moyens électroniques de traitement du signal issu du capteur, référencés 4, et enfin des moyens d'alarme susceptibles d'émettre un signal d'avertissement ou de dissuasion, tel qu'un signal sonore; les moyens d'alarme portent la référence 5.

La figure 2 représente un synoptique du fonctionnement du dispositif de détection de la variation de la position angulaire du véhicule 1. Le dispositif comporte successivement un capteur 2 suivi d'un premier circuit 6 apte à délivrer un signal représentatif de la position du véhicule 1. Le premier circuit 6 est suivi d'un convertisseur numérique/analogique référencé 7 et délivrant un signal continu. Ce dernier délivre un signal amplifié soumis à un filtre 9, suivi d'un comparateur 10 apte à comparer le signal représentatif de la position réelle du véhicule A la sortie du comparateur 10 est disposé un circuit 11 de traitement du signal destiné à rendre ce dernier apte à alimenter un transducteur 12, tel qu'un moyen d'alarme sonore par exemple.

Les figures 3A et 3B montrent une représentation du capteur, constitué d'un inclinomètre du type capacitif. L'inclinomètre est constitué d'une première coquille hémisphérique 13, en matériau conducteur, dans la concavité de laquelle est disposée une seconde coquille hémisphérique 14, en matériau plastique par exemple. Les deux coquilles sont pourvues d'un rebord plan à angle droit définissant un forme générale carrée. L'espace intérieur 15 disposé entre les deux coquilles, d'épaisseur d'environ 1 à 2 mm, définit une chambre en forme d'anneau de sphère. L'espace intérieur 15 est rempli partiellement d'un liquide diélectrique, par exemple de l'eau. La face de la coquille intérieure 14, tournée vers la concavité de celle-ci, est recouverte d'un film de matériau conducteur. Selon l'exemple de réalisation montré sur les figure 3A et 3B, la coquille intérieure 14 est pourvue de quatre surfaces de revêtements conducteurs portant les références respectives 16, 17, 18 et 19. Chaque revêtement correspond à un secteur angulaire (en surface) de sphère, la demi-sphère de la coquille 14 étant ainsi partagée en quatre zones à chacune desquelles correspond un revêtement métallique respectif. Chaque revêtement métallique est prolongé sur la partie plane prolongeant les coquilles. Ces prolongements de revêtement métallique portent les références respectives 16a, 17a, 18a et 19a, et sont destinés à être reliés à un circuit électrique tel que décrit ci-après. La coquille 13 et les autre surfaces 16, 17, 18 et 19 définissent les armatures conductrices de capacités variables. Entre les armatures des capacités est disposé un diélectrique constitué par l'espace intérieur 15 disposé entre les coquilles 13 et 14. Ainsi, la coquille externe 13 constituant la première armature se trouve séparée des quatre armatures des différentes capacités variables constituées par l'un des revêtements conducteurs 16 à 19, par un matériau diélectrique constitué en partie d'air, et en partie du liquide diélectrique 20. Or, l'inclinaison du capteur 2 provoque le déplacement du liquide diélectrique 20 à l'intérieur de l'espace 15, ce qui modifie en conséquence la répartition air/liquide diélectrique entre les armatures métalliques du condensateur. Il en résulte une modification de la capacité de ce dernier. On comprend que l'inclinomètre 2, de type capacitif, comporte quatre capacités variables.

Il est à noter que l'invention n'est pas limitée à l'utilisation d'un inclinomètre de type capacitif mais inclut au contraire tout type de capteur inclinomètre qu'il soit piézoélectrique, piézorésistif, inductif, capacitif, optique.

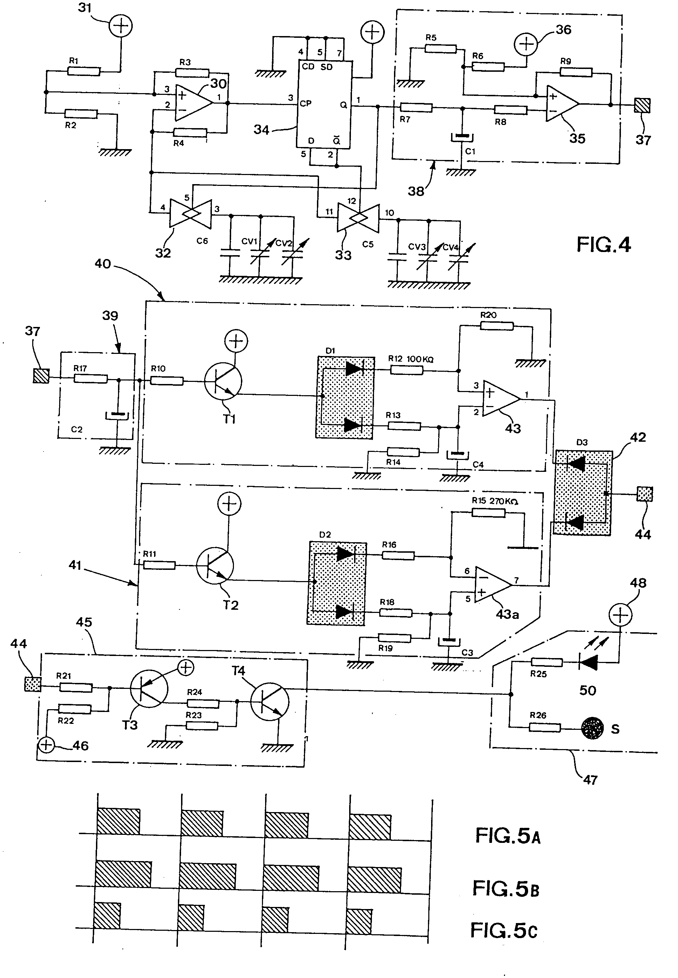

La figure 4 montre en détail le schéma électrique du dispositif selon l'invention, comportant plusieurs étages successifs décrits ci-après.

Les capacités variables constituant l'inclinomètre, sont référencées CV1, CV2, CV3 et CV4. Les capacités variables CV1 et CV2 sont disposées en parallèle sur une capacité fixe C6, tandis que les capacités variables CV3 et CV4 sont disposées en parallèle sur une capacité fixe C5. Un amplificateur opérationnel 30 est relié à son entrée positive à un générateur 31 par l'intermédiaire d'une résistance R1. Le générateur 31 est relié à la masse par l'intermédiaire de la résistance R1 et d'une résistance R2. L'entrée négative ou inverseuse de l'amplificateur opérationnel 30 est reliée d'une part au premier jeu de capacités CV1, CV2 et C6 par l'intermédiaire d'un interrupteur 32, et d'autre part aux capacités CV3, CV4 et C5 par un interrupteur 33. La sortie de l'amplificateur opérationnel 30 est reliée à une bascule 34 dont la sortie Q est reliée à la commande de l'interrupteur 33. L'entrée positive de l'amplificateur opérationnel 30 est reliée à la sortie de ce dernier par une résistance R3 (contre réaction positive), tandis que l'entrée inverseuse de l'amplificateur 30 est reliée à sa sortie par une résistance R4 contre réaction négative).

L'interrupteur 32 reçoit sur son entrée de commande le signal issu de la sortie Q de la bascule 34 qui est reçu par un convertisseur numérique/analogique 38 constitué d'une résistance R7, d'une capacité C1; C1 étant reliée, par l'intermédiaire d'une résistance R8, à l'entrée inverseuse d'un amplificateur opérationnel 35 dont l'entrée positive est reliée d'une part à sa sortie par une résistance R9, et d'autre part à une source d'alimentation 36 elle-même reliée à la masse par l'intermédiaire de résistances R5 et R6.

La sortie de l'amplificateur opérationnel 35, schématisée par le plot 37, est reliée à un filtre 39 constitué d'une résistance R17 et d'une capacité C2 reliée à la masse et à la sortie de la résistance R17. La sortie du filtre 39 est reliée à deux comparateurs numériques/analogiques à référence auto-ajustable 40 et 41, dont les sorties respectives sont reliées à un sommateur 42. Le comparateur 40 et le comparateur 41 comportent des éléments similaires. Le comparateur 40 comprend successivement une résistance R10 suivie d'un transistor T1 lui-même relié à un diviseur D1 dont la première sortie est reliée à l'entrée positive d'un amplificateur opérationnel 43 par l'intermédiaire d'une résistance R12, et dont la seconde sortie est reliée à l'entrée inverseuse de l'amplificateur opérationnel 43 par l'intermédiaire d'une résistance R13. L'entrée inverseuse de l'amplificateur opérationnel 43 est également reliée à la masse par une capacité C4 en parallèle sur une résistance R14. L'entrée positive de l'amplificateur opérationnel 43 est reliée à la masse par une résistance R20.

La sortie du sommateur 42 symbolisée par le plot 44 est reliée à un circuit de transformation du signal, portant la référence 45, et comportant successivement une résistance R21, un transistor T3, une résistance R24 et un transistor T4. L'entrée des transistors T3 et T4 est reliée respectivement à une source d'alimentation 46 par l'intermédiaire d'une résistance R22, et à la masse par une résistance R23. La sortie du circuit de transfomation 45 alimente un circuit de mise en forme, portant la référence générale 47 et comprenant une première branche reliée à une source d'alimentation 48, par l'intermédiaire d'une résistance R25 et d'un émetteur photoélectrique 50, et une seconde branche reliée à une sortie S elle-même reliée à une alarme telle que par exemple un transducteur sonore, par l'intermédiaire d'une résistance R26.

Le fonctionnement du circuit électronique ci-dessus décrit en référence à la figure 4, est le suivant.

L'amplificateur opérationnel 30, en association avec le générateur 31, constitue un oscillateur délivrant un signal alternatif dont la fréquence dépend des capacités C6, CV1, CV2, C5, CV3 et CV4, notamment. Le signal est de fréquence constante et sensiblement de l'ordre de 1 KHz. La figure 5A montre une représentation schématique du signal représenté en ondes carrées, à savoir une impulsion positive et l'autre nulle ou négative. La bascule 34 relie alternativement, par exemple toutes les millisecondes, le premier groupe de condensateurs C6, CV1 et CV2 à l'oscillateur 30, puis le second groupe de condensateurs C5, CV3 et CV4, par la commande des interrupteurs respectifs 32 et 33. Dans la position de repos du véhicule 1, c'est-à-dire pour une inclinaison de ce dernier nulle par rapport au plan de référence P0, l'oscillateur délivre un signal symétrique tel que celui représenté à la figure 5A, dans lequel l'impulsion positive est de même longueur que l'impulsion nulle ou négative.

Dans l'hypothèse où le véhicule subit une inclinaison, et voit dont donc son plan principal P différent du plan de référence P0, les valeurs des capacités CV1 et CV2 d'une part et CV3, CV4 d'autre part sont modifiées, ce qui à son tour modifie la largeur d'impulsion du signal issu de l'oscillateur. La figure 5B et la figure 5C représentent des exemples respectifs du signal émis par l'oscillateur 30 dans le cas où le véhicule subit une inclinaison l'écartant de son plan de référence P0. Il est à noter que la fréquence du signal n'est pas affectée par les modifications des valeurs des capacités variables CV1 à CV4.

Le signal issu de la bascule 34 est injecté dans le convertisseur 38, qui délivre un signal continu de valeurs représentatives de l'inclinaison du véhicule par rapport au plan de référence. Cette valeur est égale à la moitié de la tension d'alimentation (UCC) dans le cas où le plan du véhicule correspond au plan de référence P0, c'est-à-dire que le signal (voir figure 5a) présente une impulsion positive de même largeur que l'impulsion nulle ou négative.

Le signal continu issu du convertisseur 38 est filtré à nouveau en 39, puis soumis au deux comparateurs 40 et 41 disposés en parallèle. Les comparateurs 40 et 41 ont un fonctionnement similaire, à l'exception du fait que les entrées des amplificateurs opérationnels respectifs 43 et 43a ont des entrées inversées, comme il sera décrit ci-après.

Le rôle du comparateur est de comparer le signal issu de l'oscillateur 30, et représentatif de la position angulaire du véhicule, par rapport à une position du véhicule dit au repos et correspondant au plan de référence P0. Cette comparaison est réalisée à l'aide d'un diviseur (D1 respectivement D2). Dans le comparateur 40, l'entrée inverseuse de l'amplificateur opérationnel 43 reçoit un signal représentatif du plan de référence P0, appelé signal de référence. Le signal de référence est engendré par l'intermédiaire de la capacité C4 de grande capacité qui est chargée par le signal représentatif de la position réelle du véhicule. La capacité C4 étant de grande inertie, elle se décharge très lentement comparé aux variations du signal représentatif de la position réelle du véhicule. On obtient donc à l'entrée inverseuse de l'amplificateur opérationnel 43 un signal dont la valeur est sensiblement constante et qui correspond à une valeur de référence. Alternativement on pourrait également prévoir une source de tension continue et constante, de valeur préréglée, correspondant à une position de repos P0. L'avantage de la solution représentée sur le figure 4, réside dans le fait que le signal de référence présente une valeur auto-ajustable ou auto-réglable. Ceci est avantageux dans le cas où la position de référence P0 est elle-même inclinée par rapport à l'horizontale de façon relativement inhabituelle, lorsque le véhicule par exemple est stationné dans une rue en pente. Ainsi, la génération du signal par l'oscillateur 30, représentatif de la position réelle du véhicule après un temps très court, lorsque le dispositif vient d'être enclenché par exemple, représente la position au repos du véhicule. Le signal émis par l'oscillateur correspond à la position réelle du véhicule, qui est celle de la position au repos, même si cette dernière est elle-même inclinée par rapport à l'horizontale. Il est à noter que la valeur du signal de référence est ajustable,à toutes valeurs, automatiquement, sans intervention de l'opérateur ou de l'utilisateur du véhicule.

La différence entre les comparateur 40 et 41 réside en ce que le signal de référence alimente l'entrée inverseuse de l'amplificateur opérationnel 43 pour le comparateur 40, tandis que le signal de référence alimente l'entrée non inverseuse de l'amplificateur opérationnel 43a du comparateur 41. Ceci permet d'assurer la détection d'un changement d'inclinaison du véhicule par rapport au plan de référence, que ce soit par une rotation du plan dans une direction ou dans la direction opposée.

Les signaux issus des deux comparateurs 40 et 41 alimentent le sommateur 42 qui délivre le signal ainsi constitué au circuit de traitement 45 apte à permettre à ce dernier d'alimenter des moyens d'alarme 47 connus en eux-mêmes.

Il est à noter que l'invention n'est pas limitée au mode de réalisation représenté sur les dessins décrits ci-dessus. Notamment, le circuit de la figure 4 peut comporter des moyens numériques susceptibles: 1) d'échantillonner le signal, représentatif de la position réelle du véhicule, à la sortie de la bascule 34; 2) de compter les échantillons représentatifs de l'impulsion positive; 3) et de comparer ce nombre à un nombre de référence correspondant,au plan de référence, et en cas de différence, d'actionner des moyens d'alarme.

## Revendications

**1 -** Dispositif pour la détection de changement de position angulaire d'un corps par rapport à un plan de référence, du type comportant:
- un capteur comprenant un élément sensible à la position angulaire dudit corps;
- un premier circuit apte à délivrer un signal représentatif de ladite position; et
- un second circuit apte à comparer ledit signal représentatif de ladite position à un signal de référence correspondant audit plan de référence, et apte à délivrer un signal représentatif dudit changement;
caractérisé en ce que ledit élément sensible est constitué d'un inclinomètre.

**2 -** Dispositif selon la revendication 1, caractérisé en ce que ledit inclinomètre est du type capacitif.

**3 -** Dispositif selon la revendication 2, caractérisé en ce que ledit inclinomètre capacitif comporte au moins deux capacités variables disposées dans des plans différents.

**4 -** Dispositif selon la revendication 3, caractérisé en ce que ledit inclinomètre capacitif comporte quatre capacités variables reliées deux par deux en parallèle.

**5 -** Dispositif selon la revendication 3, caractérisé en ce que ledit premier circuit comprend:
- un oscillateur relié auxdites capacités variables, et susceptible d'engendrer un signal de fréquence constante;
- un moyen interrupteur (du type bascule) apte à relier ledit oscillateur alternativement à la première capacité puis à la seconde capacité;
- un convertisseur alternatif/continu.

**6 -** Dispositif selon l'une des revendications 1 à 5, caractérisé en ce que ledit signal issu du deuxième circuit est représentatif du changement de position angulaire suivant l'une ou l'autre des directions angulaires de part et d'autre dudit plan de référence.

**7 -** Dispositif selon l'une des revendications 1 à 6, caractérisé en ce que ledit second circuit comprend des moyens pour engendrer un signal de référence ajustable.

**8 -** Dispositif selon la revendication 7, caractérisé en ce que ledit signal de référence est ajustable en fonction d'une position angulaire donnée dudit corps.

**9 -** Dispositif selon l'une des revendications 7 ou 8, caractérisé en ce que lesdits moyens pour engendrer un signal de référence ajustable comprennent une capacité de grande inertie et dont la durée de chargement est très supérieure à dix secondes.

**10 -** Dispositif selon l'une des revendications 1 à 9, caractérisé en ce que le second circuit porte au moins un comparateur dont la première entrée reçoit ledit signal de référence et la seconde entrée reçoit ledit signal représentatif de la position dudit corps.

**11 -** Dispositif selon les revendications 6 et 10, caractérisé en ce que ledit second circuit comprend un premier et un second comparateurs en parallèle recevant chacun ledit signal représentatif de ladite position, la sortie de chaque comparateur étant reliée à un sommateur.

**12 -** Dispositif selon la revendication 11, caractérisé en ce que le premier comparateur reçoit ledit signal de référence sur son entrée négative, et le second comparateur reçoit ledit signal de référence sur son entrée positive.

**13 -** Dispositif selon l'une des revendications 1 à 12, caractérisé en ce qu'il comporte en outre un troisème circuit de traitement dudit signal représentatif de la position, en vue d'alimenter un transducteur.

**14 -** Dispositif selon la revendication 13, caractérisé en ce que ledit transducteur comporte un système d'alarme.

**15 -** Dispositif selon l'une des revendications 4 à 14; caractérisé en qu'il comporte en outre:
- un moyen d'échantillonnage du signal émis par ledit oscillateur;
- un moyen de comptage du nombre d'échantillons numériques représentatifs dudit signal; et
- un moyen de comparaison dudit nombre à un nombre de référence représentatif d'un signal correspondant audit plan de référence.
